Europäisches Patentamt

European Patent Office

Office européen des brevets

(19)

(11) EP 0 774 718 A1

(12) DEMANDE DE BREVET EUROPEEN

(43) Date de publication:
21.05.1997 Bulletin 1997/21

(51) Int Cl.6: G06F 13/12

(21) Numéro de dépôt: 96402404.6

(22) Date de dépôt: 12.11.1996

(84) Etats contractants désignés:
AT BE CH DE DK ES FI GB GR IE IT LI LU MC NL
PT SE

(30) Priorité: 14.11.1995 FR 9513470

(71) Demandeur: MATRA COMMUNICATION
29101 Quimper (FR)

(72) Inventeurs:
• Congard, Hervé
56100 Lorient (FR)

• Gourmelen, Eric
35170 Bruz (FR)
• Mal, Serge
35170 Bruz (FR)
• Rosier, Eric
35000 Rennes (FR)

(74) Mandataire: Loisel, Bertrand
Cabinet Plasseraud,
84, rue d'Amsterdam
75440 Paris Cédex 09 (FR)

(54) Dispositif de transfert d'informations numériques

(57) Le dispositif de transfert d'informations numériques comprend un module d'interface extérieure (30) avec au moins une ligne de communication, au moins un module d'interface de stockage (40) permettant d'échanger des informations numériques avec une unité de stockage respective, un module (60) d'interface avec un ordinateur-hôte, un bus de données commun (80) relié à chacun desdits modules d'interface (30,40,60), un module (82) de séquencement du bus commun pour déclencher des transferts d'informations sur le bus commun entre les modules d'interface, et un processeur de supervision (84) pour configurer le module de séquencement du bus commun et les modules d'interface en réponse à des ordres de transfert reçus de l'ordinateur-hôte. Utilisation notamment pour transférer des signaux de télévision numérique.

FIG.2.

## Description

La présente invention concerne un dispositif de transfert d'informations numériques, permettant des échanges d'informations entre plusieurs entités comprenant un ordinateur-hôte, une ou plusieurs unités de stockage telles que des unités à disque dur, et une ou plusieurs lignes de communication extérieures.

Dans une application principale de ce dispositif, les informations numériques concernées sont relatives à des programmes de télévision, notamment au format MPEG2/DVB défini par l'Organisation Internationale de Normalisation. Dans cette application, les échanges entre les lignes de communication extérieures et les unités de stockage servent à l'acquisition ou à la restitution de flux binaires, tandis que l'ordinateur-hôte, outre sa fonction de pilotage des échanges, sert à l'analyse des flux binaires (en temps réel s'ils sont reçus directement d'une ligne extérieure, ou après un stockage) et à la génération d'autres flux binaires (émis directement ou après stockage).

Pour réaliser un tel dispositif, une solution classique consiste à équiper l'ordinateur-hôte d'une part d'une ou plusieurs cartes de contrôle de disques durs (drivers SCSI) assurant la gestion des transferts de ou vers les disques, et d'autre part d'une ou plusieurs cartes d'interface avec le monde extérieur (typiquement une carte par ligne et par sens de transmission). Le bus du processeur central de l'ordinateur-hôte assure alors le lien entre les différentes cartes et le processeur de l'ordinateur-hôte, et il constitue donc un passage obligé pour les informations numériques transférées. Dans un tel dispositif, les performances sont sévèrement limitées par la bande passante du bus et par la puissance du processeur de l'ordinateur-hôte. Ceci limite fortement les débits numériques accessibles par le dispositif. En outre, l'ordinateur-hôte se trouve quasiment exclusivement dédié à la fonction d'acquisition et de restitution, et n'est pas en mesure d'assurer d'autres fonctions pendant le déroulement d'un transfert. La multiplicité des cartes raccordées sur le bus de l'ordinateur-hôte est un autre facteur limitant les performances d'un tel dispositif. En effet, l'ordinateur-hôte peut avoir à gérer de nombreux contrôleurs d'interface, et il est nécessaire de disposer d'importantes ressources en termes de connecteurs, de canaux DMA, d'interruptions, d'espace mémoire et/ou d'entrées/sorties.

Un but de la présente invention est de proposer un dispositif de transfert d'informations numériques qui soit moins sensible aux limitations ci-dessus et qui permette donc d'atteindre de meilleures performances, notamment en ce qui concerne le débit numérique accessible pour les transferts.

Un dispositif selon l'invention comprend un module d'interface extérieure avec au moins une ligne de communication, au moins un module d'interface de stockage permettant d'échanger des informations numériques avec une unité de stockage respective, un module d'interface avec un ordinateur-hôte, un bus de données commun relié à chacun desdits modules d'interface, un module de séquencement du bus commun pour déclencher des transferts d'informations sur le bus commun entre les modules d'interface, et un processeur de supervision pour configurer le module de séquencement du bus commun et les modules d'interface en réponse à des ordres de transfert reçus de l'ordinateur-hôte.

De cette façon, les commandes de transfert ne passent pas par le bus commun qui ne sert essentiellement qu'aux transferts d'informations proprement dits. Le module dédié au séquencement du bus commun soulage les processeurs de cette tâche contraignante. Le processeur de supervision est alors disponible pour fournir les commandes nécessaires, notamment pour configurer les modules d'interface, sans que ceci limite de manière importante les performances du dispositif.

Les informations numériques peuvent être transférées par blocs successifs dimensionnés en fonction de la longueur des flux numériques et de la taille des mémoires tampon des modules d'interface.

Le dispositif selon l'invention a par ailleurs l'avantage d'une grande flexibilité d'utilisation. On peut notamment distinguer les huit modes de transfert suivants :

- ligne extérieure vers unités de stockage (mode acquisition) ;
- unités de stockage vers ligne extérieure (mode restitution) ;
- interface de l'ordinateur-hôte vers unités de stockage (mode écriture) ;
- unités de stockage vers interface de l'ordinateur-hôte (mode lecture) ;
- ligne extérieure vers interface de l'ordinateur-hôte (mode acquisition zéro disque) ;
- interface de l'ordinateur-hôte vers ligne extérieure (mode restitution zéro disque) ;
- ligne extérieure vers unités de stockage, et unités de stockage vers interface de l'ordinateur-hôte (mode acquisition mixte) ;
- interface de l'ordinateur-hôte vers unités de stockage, et unités de stockage vers ligne extérieure (mode restitution mixte).

Les deux derniers modes cités sont des modes mixtes rendus possibles par le découpage en blocs successifs des flux numériques. Par exemple, dans le mode d'acquisition mixte, on peut faire alterner un ou plusieurs blocs transférés de la ligne extérieure vers les unités de stockage et un ou plusieurs blocs transférés des unités de stockage vers l'interface de l'ordinateur-hôte. Ce mode d'acquisition mixte permet ainsi à l'ordinateur-hôte d'analyser un programme stocké pendant qu'un autre programme (ou une séquence suivante du même programme) est en cours d'acquisition depuis la ligne extérieure. De même, le mode de restitution mixte permet, pendant que le dispositif émet une séquence d'un programme, de charger dans les unités de stockage un autre programme ou une séquence suivante du même programme.

D'autres particularités et avantages de la présente invention apparaîtront dans la description ci-après d'un exemple de réalisation préféré mais non limitatif, en référence aux dessins annexés dans lesquels :

- la figure 1 est un schéma d'une installation comportant un dispositif de transfert selon l'invention ;
- la figure 2 est un schéma synoptique d'un dispositif de transfert selon l'invention ;
- la figure 3 est un schéma de principe d'un module de séquencement du bus commun du dispositif de la figure 2 ;
- la figure 4 montre des chronogrammes illustrant le fonctionnement du module de séquencement schématisé sur la figure 3 ;
- la figure 5 est un schéma de principe de moyens de gestion d'une interface de stockage, appartenant au dispositif de la figure 2 ;
- la figure 6 montre des chronogrammes illustrant le fonctionnement des moyens de gestion schématisés sur la figure 5 ; et
- la figure 7 est un schéma de principe de moyens de gestion d'une interface avec un ordinateur-hôte, appartenant au dispositif de la figure 2.

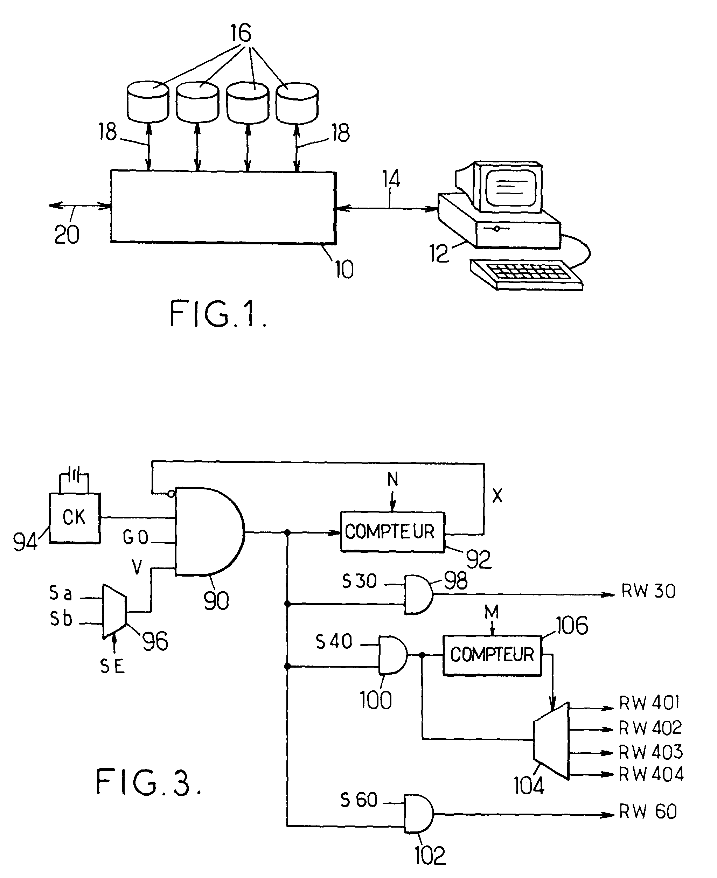

La figure 1 montre un dispositif de transfert 10 selon l'invention relié à un micro-ordinateur-hôte 12, par exemple de type PC. Le dispositif 10 peut être réalisé sous la forme d'une carte électronique équipant le micro-ordinateur 12. La liaison entre le dispositif 10 et le micro-ordinateur 12 est constituée par le bus 14 (par exemple un bus de 32 bits au format EISA) du processeur central du micro-ordinateur. Le micro-ordinateur 12 sert d'interface utilisateur, pour que l'utilisateur puisse paramétrer le dispositif et déclencher les transferts d'informations souhaités. Le dispositif de transfert 10 est par ailleurs relié à un ensemble d'unités de stockage 16, au nombre de quatre dans l'exemple représenté. Les unités de stockage 16 sont typiquement des unités à disque dur reliées chacune au dispositif 10 par un bus 18 tel qu'un bus de 16 bits à un format Fast SCSI-2.

Le dispositif de transfert 10 est par ailleurs relié à une ou plusieurs lignes de communication numérique extérieures 20, mono- ou bidirectionnelles, adaptées à la transmission de signaux de télévision numérique.

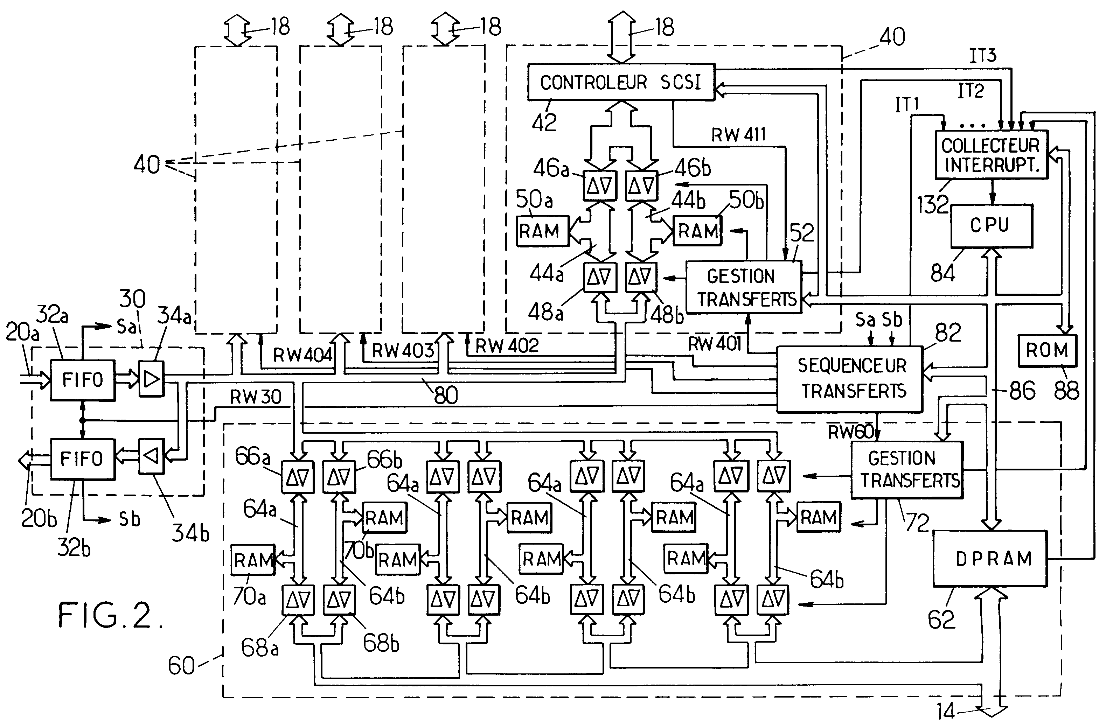

La figure 2 montre l'architecture générale du dispositif de transfert 10. Il comprend un module 30 d'interface extérieure pour le raccordement à la ou les lignes de communication 20, quatre modules d'interface de stockage 40 reliés chacun à l'une des unités à disque dur 16 par l'intermédiaire d'un bus SCSI respectif 18, et un module 60 d'interface avec l'ordinateur-hôte, relié au micro-ordinateur 12 par le bus EISA 14. Les modules 40 d'interface de stockage ont tous la même structure, de sorte qu'un seul d'entre eux est représenté en détail sur la figure 2.

Chacun de ces modules d'interface 30, 40, 60 est relié à un bus de données commun 80 par lequel passent les informations numériques échangées. Le bus 80 a par exemple une largeur de 8 bits pour assurer les transferts sous forme de mots de données de 8 bits (octets). Le cadencement des transferts sur le bus commun 80 est commandé par un module de séquencement 82 à une fréquence maximale de 16 MHz par exemple. Le dispositif de transfert comporte également un processeur de supervision (CPU) 84 servant à configurer, par l'intermédiaire de son bus 86, le module de séquencement 82 et les modules d'interface 30, 40, 60. Le processeur 84 est associé à une mémoire de programmes 88 contenant les programmes nécessaires à son fonctionnement.

Le processeur 84 a en outre accès, par l'intermédiaire de son bus 86, à une mémoire à accès double 62 appartenant au module 60 d'interface avec l'ordinateur-hôte. L'autre accès de cette mémoire 62 est relié au bus EISA 14. La mémoire 62 permet au micro-ordinateur 12 de fournir les ordres de transfert et diverses commandes au processeur de supervision 84, et au processeur 84 d'adresser au micro-ordinateur 12 des données sur le déroulement des transferts ou le statut du dispositif. Les communications par l'intermédiaire de la mémoire 62 sont réalisées par un mécanisme conventionnel d'interruption vers l'un ou l'autre des deux processeurs raccordés, la mémoire 62 pouvant par exemple être partagée en deux zones d'adressage, l'une pour les commandes du micro-ordinateur 12 vers le processeur 84, et l'autre pour les réponses du processeur 84 vers le micro-ordinateur 12.

Le module d'interface extérieure 30 représenté sur la figure 2 comporte deux mémoires tampon 32a, 32b de type premier entré-premier sorti (FIFO), ayant par exemple une capacité de deux kilo-octets chacune. La mémoire 32a sert à la réception d'informations numériques depuis une ligne parallèle 20a de largeur correspondant à un octet. La mémoire 32a est reliée, pour la lecture, au bus commun 80 par l'intermédiaire d'un élément de commutation 34a constitué par exemple par un registre à trois états d'un octet. La mémoire 32a adresse au module 82 de séquencement des transferts sur le bus commun des données Sa représentatives du degré de remplissage de cette mémoire 32a. Ces données Sa peuvent ainsi inclure un bit indiquant si la mémoire 32a est vide ou non, un bit indiquant si la mémoire 32a est pleine ou non, et un bit indiquant si le remplissage de la mémoire 32a dépasse ou non la moitié de sa capacité.

La mémoire tampon 32b sert à l'émission d'informations numériques vers une ligne parallèle 20b de largeur correspondant à un octet. La mémoire 32b est reliée, pour l'écriture, au bus commun 80 par l'intermédiaire d'un élément de commutation 34b pouvant également être constitué par un registre à trois états d'un octet. La mémoire 32b adresse également au module de séquencement 82 des données Sb, semblables aux données Sa, représentatives du degré de remplissage de la mémoire 32b.

Le module d'interface extérieure 30 comporte encore un certain nombre d'éléments qui ne sont pas concernés directement par la présente invention et qui ne sont pas représentés sur la figure 2 pour ne pas surcharger le dessin. En particulier, entre les lignes parallèles 20a et 20b d'une part et la ou les lignes de communication extérieures 20 d'autre part sont prévus des circuits conventionnels pour formater les informations numériques en respectant le protocole de communication avec l'extérieur (codage binaire, synchronisation, adaptation de niveau, sérialisation/ desérialisation...). Le module d'interface extérieure 30 peut également comprendre un circuit duplexeur dans le cas d'une ligne de communication extérieure bidirectionnelle, ou encore un multiplexeur dans le cas où plusieurs lignes de communication extérieures différentes sont raccordées au dispositif. Les commandes d'écriture dans la mémoire 32a et de lecture dans la mémoire 32b peuvent être issues de la ligne de communication extérieure 20 (mode esclave) lorsque celle-ci transporte des signaux d'horloge et de commande, où elles peuvent être générées localement (mode maître) à partir d'une base de temps non représentée appartenant au module d'interface extérieure 30. Bien que cela ne soit pas représenté sur la figure 2 pour faciliter la lecture du dessin, le bus 86 du processeur de supervision 84 est également relié au module d'interface extérieure 30 pour permettre au processeur 84 de configurer ce module en ce qui concerne les aspects suivants :

- sélection de la ligne extérieure active dans le cas où plusieurs lignes sont raccordées au dispositif (aucune ligne n'est sélectionnée dans les modes précités d'écriture et de lecture mettant seulement en jeu les modules d'interface 40 et 60) ;
- sélection du sens de transfert. Ceci comporte notamment le positionnement des éléments de commutation 34a et 34b et l'envoi aux mémoires 32a et 32b de signaux de type "chip select" pour ne mettre en service qu'une seule de ces deux mémoires ;
- sélection du mode de fonctionnement du module d'interface extérieure (maître ou esclave).

Le module d'interface extérieure 30 reçoit du module de séquencement 82 un signal de cadencement RW30 qui est adressé à l'entrée de commande de lecture de la mémoire tampon 32a et à l'entrée de commande d'écriture de la mémoire tampon 32b afin de commander les accès depuis le bus commun 80 dans la mémoire tampon qui a été sélectionnée lors de la configuration par le processeur 84.

Chaque module d'interface de stockage 40 comporte :

- un contrôleur SCSI pour commander de façon connue les échanges d'informations avec l'unité de stockage associée 16, configuré par le processeur de supervision 84 par l'intermédiaire de son bus 86 ;
- deux bus de données internes 44a, 44b ayant par exemple une largeur de 16 bits chacun ;
- deux premiers éléments de commutation 46a, 46b situés chacun entre le contrôleur SCSI 42 et l'un des bus internes 44a, 44b et pouvant être constitués chacun par un registre à trois états de 16 bits ;
- deux seconds éléments de commutation 48a, 48b situés chacun entre le bus commun 80 et l'un des bus internes 44a, 44b ;
- deux mémoires tampon 50a, 50b ayant chacune son accès de données relié à l'un des bus internes 44a, 44b ;
- un gestionnaire de transferts 52 fournissant les commandes nécessaires aux éléments de commutation 46a, 46b, 48a, 48b et aux mémoires tampon 50a, 50b en réponse à des paramètres de configuration reçus du processeur de supervision 84 par son bus 86 et de signaux de cadencement RW401, RW411 reçus du module de séquencement 82 et du contrôleur SCSI 42.

La capacité des mémoires tampon 50a, 50b est commodément prise conforme à la capacité des mémoires-cache des unités à disque dur 16. Une capacité de 256 kilo-octets par mémoire tampon 50a, 50b convient ainsi pour la plupart des disques durs actuellement disponibles. Pour assurer la transition 8 bits/16 bits entre le bus commun 80 et les bus internes 44a, 44b, les éléments de commutation 48a, 48b peuvent simplement être constitués chacun par deux registres à trois états de huit bits en parallèle, accédés à tour de rôle depuis le bus commun 80, et seulement un cycle sur deux depuis les bus internes 44a, 44b.

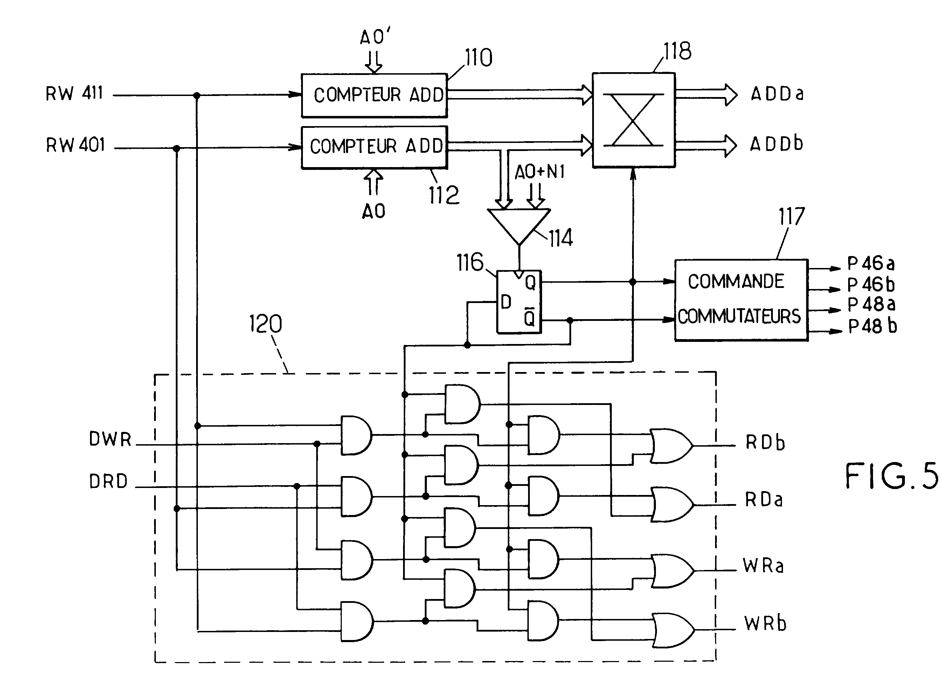

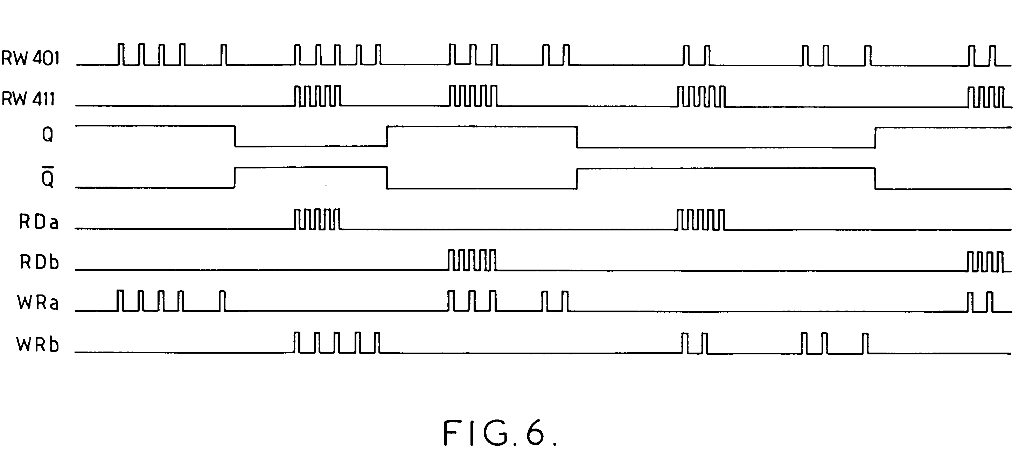

Le gestionnaire de transferts 52 est typiquement réalisé sous la forme d'un composant logique programmable de la famille EPLD ("Erasable Programmable Logic Device"). L'organisation du gestionnaire de transferts 52, qui sera décrite plus loin en référence aux figures 5 et 6, est telle qu'une des deux mémoires tampon 50a, 50b soit accessible par le bus commun 80 pendant que l'autre est accessible par le contrôleur SCSI 42, et que chacune de ces deux mémoires tampon soit alternativement accessible par le bus commun et par le contrôleur. Ainsi, l'une des deux mémoires tampon peut se charger pendant que l'autre se décharge, de sorte qu'on améliore la rapidité de transfert et qu'on n'est pas gêné par les différences de vitesse de fonctionnement entre le bus commun 80 et les bus SCSI 18.

L'organisation du module 60 d'interface avec l'ordinateur-hôte est comparable à celle des modules d'interface de stockage 40. Dans le cas représenté sur la figure 2, où le bus 14 de l'ordinateur-hôte a une largeur de 32 bits tandis que le bus commun 80 a une largeur de 8 bits, quatre paires de bus internes 64a, 64b, de largeur 8 bits chacun, sont prévus. Deux premiers éléments de commutation 66a, 66b (registres à trois états de 8 bits) relient respectivement au bus commun 80 les bus internes 64a et 64b. Pour chaque paire de bus internes 64a, 64b, un quart respectif de la partie donnée du bus 14 de l'ordinateur-hôte est relié à chacun des bus internes 64a, 64b par un second élément de commutation respectif 68a, 68b (registre à trois états de 8 bits). Une mémoire tampon 70a, 70b est reliée à chaque bus interne 64a, 64b de chaque paire. Les accès en écriture et en lecture dans ces mémoires tampon 70a, 70b, ainsi que les ouvertures et fermetures des éléments de commutation 66a, 66b, 68a, 68b sont commandés par un gestionnaire 72 de l'interface avec l'ordinateur-hôte en réponse à des paramètres de configuration reçus du processeur de supervision 84 par l'intermédiaire de son bus 86 et d'un signal de cadencement RW60 fourni par le module 82 de séquencement du bus commun. Le gestionnaire de transferts 72 peut consister en un composant logique programmable de type EPLD.

Les accès aux mémoires tampon 70a, 70b sont séquentiels depuis le bus commun 80 et parallèles depuis le bus 14 de l'ordinateur-hôte. Dans le cas par exemple d'un transfert depuis le bus commun 80 vers le micro-ordinateur 12, les octets successifs d'un bloc sont écrits à tour de rôle dans les quatre mémoires tampon 70a. Une fois le transfert du bloc terminé (la taille du bloc est donnée par le processeur de supervision 84 de manière à ne pas dépasser quatre fois la capacité d'une des mémoires tampon 70a, 70b), le gestionnaire 72 fait basculer les commutateurs 66a, 66b, 68a et 68b. Pendant le transfert du bloc suivant du bus commun 80 vers les autres mémoires tampon 70b, les mémoires tampon 70a sont lues collectivement vers le bus 14 de l'ordinateur-hôte comme si elles constituaient une mémoire unique de 32 bits. Pour les accès aux mémoires 70a, 70b depuis le bus 14 de l'ordinateur-hôte, on peut utiliser un canal d'accès direct en mémoire (DMA) du micro-ordinateur 12.

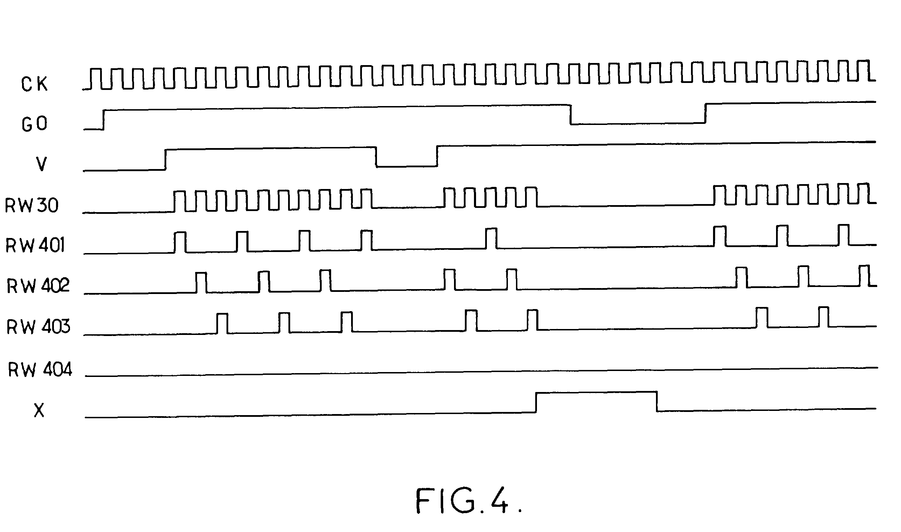

La figure 3 est un schéma faisant apparaître les principales fonctions logiques du module 82 de séquencement du bus commun qui, en pratique peut consister en un composant logique programmable de type EPLD. Les paramètres de configuration que le processeur de supervision 84 fournit au module 82 par l'intermédiaire de son bus 86 comprennent :

- le nombre M d'unités à disque dur 16 qui sont effectivement raccordées aux modules d'interface de stockage 40 ;
- le nombre N d'octets de chaque bloc d'informations à transférer ;
- un signal de sélection S30 indiquant si le transfert d'un bloc met en jeu une ligne extérieure (S30=1) ou non (S30=0) ;
- un signal de sélection S40 indiquant si le transfert d'un bloc met en jeu les unités à disque dur 16 (S40=1) ou non (S40=0) ;
- un signal de sélection S60 indiquant si le transfert d'un bloc est à effectuer depuis ou vers l'ordinateur-hôte 12 (S60=1) ou non (S60=0) ;

- un paramètre de sélection SE dépendant du sens de transmission sur une ligne extérieure et du rang du bloc courant dans la séquence à transférer ;
- un signal de validation GO pour déclencher (GO=1) ou arrêter (GO=0) le transfert d'un bloc.

Ces paramètres sont mis à jour par le processeur 84 avant le transfert de chaque bloc, en les écrivant dans des registres non représentés du module 82, adressables par le bus 86.

Les impulsions de commande d'accès par le bus commun 80 sont délivrées par une porte ET à quatre entrées 90 dans l'exemple représenté. Elles sont fournies à l'entrée d'incrémentation d'un compteur 92 initialisé à sa valeur de débordement moins N au début du transfert de chaque bloc. Le bit de débordement X de ce compteur 92 est adressé à une entrée inverseuse de la porte ET 90. Les autres entrées de la porte ET 90 reçoivent respectivement un signal d'horloge CK à 16 MHz fourni par un oscillateur 94, le signal de validation GO, et un autre signal de validation V fourni par un sélecteur 96 commandé par le paramètre de sélection SE. Le signal de validation V est constamment à 1 lorsque le paramètre de sélection SE indique qu'aucune ligne extérieure 20 n'est mise en jeu dans le transfert courant. Sinon le signal V correspond à l'un des bits, sélectionné selon SE, compris dans les données Sa, Sb reçues du module d'interface extérieure 30 et représentatifs du degré de remplissage des mémoires tampon 32a, 32b.

Les impulsions de commande délivrées par la porte ET 90 sont combinées aux signaux de sélection S30, S40 et S60 par des portes ET respectives 98, 100 et 102. Les signaux de commande d'accès RW30 et RW60 destinés au module d'interface extérieure 30 et au module d'interface avec l'ordinateur-hôte 60 sont disponibles en sortie des portes 98 et 102, respectivement. Les signaux de commande RW401, RW402, RW403 et RW404 respectivement destinés aux gestionnaires de transferts 52 des quatre modules d'interface de stockage 40, sont disponibles sur les quatre sorties d'un démultiplexeur 104 commandé par la valeur d'un compteur 106 sur deux bits, et dont l'entrée est reliée à la sortie de la porte ET 100. Le compteur 106, incrémenté par les impulsions fournies par la porte 100, est programmé avec le nombre M de disques raccordés, de manière à compter cycliquement de 0 à M-1. Ainsi, les octets appartenant à chaque bloc d'informations transféré sont échangés à tour de rôle par l'intermédiaire des différents modules d'interface de stockage en service.

Le fonctionnement du module de séquencement 82 schématisé sur la figure 3 est illustré par les chronogrammes de la figure 4, dans le cas d'un transfert en acquisition d'une ligne extérieure 20 vers les unités de stockage 16. Dans l'exemple illustré par la figure 4, seulement trois unités à disque dur 16 sont reliées aux modules d'interface de stockage (M=3).

Le découpage en blocs de la séquence d'informations à acquérir est assuré par le processeur de supervision 84 de façon que chaque bloc ait une longueur en nombre d'octets au plus égale à M fois la capacité C d'une des mémoires tampon 50a, 50b des modules d'interface de stockage 40. Si la taille L de la séquence à acquérir est connue a priori, le processeur 84 peut homogénéiser la longueur des blocs pour rendre plus régulier le fonctionnement du dispositif, par exemple en découpant la séquence en n=1+E(L/MC) blocs successifs (E(.) représentant la partie entière), en prenant jusqu'à l'avant-dernier bloc une longueur N égale à E(L/n) et pour le dernier bloc une longueur égale à L-(n-1)E(L/n). Si la longueur de la séquence à acquérir est inconnue, le processeur 84 choisit par exemple la longueur maximale N=MC pour tous les blocs jusqu'à l'avant-dernier. Dans le cas de l'acquisition d'une séquence, les données de sélection SE sont définies par le processeur 84 de façon que le bit de validation V corresponde au bit indiquant si la mémoire tampon 32a a dépassé la moitié de sa capacité (V=1) ou non (V=0), sauf pour le dernier bloc de la séquence où le bit de validation sélectionné V est celui indiquant si la mémoire tampon 32a est vide (V=0) ou non (V=1).

La figure 4 montre l'acquisition d'un bloc de taille N=15 (première période où GO=1) et le début de l'acquisition du bloc suivant. Le module 82 marque des pauses pendant que la mémoire tampon d'entrée 32a n'est pas à moitié pleine (V=0), et également entre les transferts de deux blocs successifs (GO=0 ou X=1), ceci afin de laisser le temps au module de séquencement 82 et aux modules d'interface 30, 40 de se réinitialiser avec les prochaines données de configuration pour le transfert du bloc suivant. La figure 4 montre les impulsions de commande d'accès RW30 adressées à l'entrée de lecture de la mémoire 32a et les impulsions de commande d'accès RW401, RW402 et RW403 réparties à tour de rôle entre les trois modules d'interface de stockage utilisés.

Le module de séquencement 82 peut également assurer des fonctions de contrôle pour transmettre des signaux d'interruption IT1 (figure 2) au processeur 84 lorsque certaines situations sont détectées. Il peut notamment signaler au processeur des anomalies au niveau des mémoires tampon du module d'interface extérieure, détectées sur la base des données Sa, Sb, indiquer au processeur le moment où le transfert d'une séquence a commencé, le processeur 84 pouvant alors en informer le micro-ordinateur 12 via la mémoire 62, ou encore indiquer au processeur les instants de fin de transfert d'un bloc (débordement du compteur 92).

La figure 5 est un schéma faisant apparaître les principales fonctions logiques du gestionnaire de transferts 52 d'un module d'interface de stockage 40. Les paramètres de configuration que le processeur de supervision 84 fournit au gestionnaire 52 par l'intermédiaire de son bus 86 comprennent :

- le nombre N1 d'octets du prochain bloc à transférer depuis ou vers le bus commun 80 qui concernent le module d'interface en question ;

- une valeur A0 de décalage d'adresse (offset) pour l'accès aux mémoires tampon 50a, 50b depuis le bus commun 80, pour tenir compte de l'organisation en secteurs des disques durs ;
- une adresse A0' pour le premier accès aux mémoires tampon 50a, 50b depuis le contrôleur SCSI 42 ;
- un signal de sélection DWR indiquant si le transfert en cours est du bus commun 80 vers les disques durs 16 (DWR=1) ou non (DWR=0) ;
- un signal de sélection DRD indiquant si le transfert en cours est des disques durs vers le bus commun 80 (DRD=1) ou non (DRD=0).

Ces paramètres de configuration sont mis à jour par le processeur 84 avant le transfert de chaque bloc en les écrivant dans des registres non représentés du composant logique 52, adressables par le bus 86.

Le gestionnaire de transferts 52 comprend deux compteurs d'adresse 110, 112 pour produire les adresses destinées aux mémoires tampon accessibles respectivement depuis le contrôleur SCSI 42 et depuis le bus commun 80. Le compteur 110 est initialisé au début du transfert d'un bloc à l'adresse A0' fournie par le processeur 84, et est incrémenté par les impulsions de commande d'accès RW411 issues du contrôleur SCSI 42 (on suppose ici que le générateur de cycles correspondant appartient au contrôleur 42, mais il pourrait également appartenir au gestionnaire 52). Le compteur 112 est initialisé au début du transfert d'un bloc à l'adresse A0 fournie par le processeur 84, et est incrémenté par les impulsions de commande d'accès RW401 issues du module de séquencement 82. Un comparateur 114 compare l'adresse fournie par le compteur 112 à l'adresse de fin A0+N1 fournie par le processeur 84 et délivre une impulsion lorsque ces deux adresses deviennent égales. Cette impulsion est adressée à l'entrée d'horloge d'une bascule de type D 116. La bascule 116 a sa sortie inverseuse $\overline{Q}$ reliée à son entrée D, de sorte qu'elle change d'état à la fin du transfert de chaque bloc.

Un circuit 117 met en forme les commandes P46a, P46b, P48a, P48b destinées aux éléments de commutation 46a, 46b, 48a, 48b du module d'interface en fonction de l'état de la bascule 116 pour sélectionner le bus interne 44a, 44b qui communique avec le bus commun 80 pour le transfert du bloc courant, l'autre bus interne communiquant alors avec le contrôleur SCSI 42. Dans l'exemple représenté, les éléments de commutation 46a et 48b sont en haute impédance et les éléments 46b et 48a sont passants lorsque la sortie Q de la bascule 116 est à 1, tandis que les éléments de commutation 46b et 48a sont en haute impédance et les éléments 46a et 48b sont passants lorsque la sortie inverseuse $\overline{Q}$ est à 1. La sortie de la bascule 116 commande en outre un commutateur d'adresses 118 qui fournit à la mémoire 50a une adresse ADDa égale à celle fournie par le compteur 112 lorsque Q=1 et à celle fournie par le compteur 110 lorsque Q=0. Le commutateur 118 fournit en outre à la mémoire 50b une adresse ADDb égale à celle fournie par le compteur 110 lorsque Q=1 et à celle fournie par le compteur 112 lorsque Q=0.

Les gestionnaire de transferts 52 comporte encore une logique combinatoire 120 qui combine les signaux RW401, RW411, DWR, DRD, Q et $\overline{Q}$ pour fournir les signaux de commande de lecture et d'écriture RDa, WRa à la mémoire 50a et les signaux de commande de lecture et d'écriture RDb, WRb à la mémoire 50b. Dans l'exemple représenté, la logique combinatoire 120 réalise les opérations booléennes :

RDa=(Q et DRD et RW401) ou ($\overline{Q}$ et DWR et RW411)

WRa=(Q et DWR et RW401) ou ($\overline{Q}$ et DRD et RW411)

RDb=($\overline{Q}$ et DRD et RW401) ou (Q et DWR et RW411)

WRb=($\overline{Q}$ et DWR et RW401) ou (Q et DRD et RW411)

Le fonctionnement du gestionnaire de transferts 52 schématisé sur la figure 5 est illustré par les chronogrammes de la figure 6 dans le cas d'un transfert vers les unités de stockage 16 (DWR=1, mode acquisition ou écriture). Le premier bloc d'informations reçu du bus commun 80 est d'abord écrit dans la mémoire 50a (impulsions de RW401 répercutées dans la WRa avec Q=1). Une fois cette première étape terminée, on a vu que le module de séquencement 82 marque une pause pour permettre aux différents modules de se configurer pour le bloc suivant. Une fois cette pause terminée, le bloc suivant est écrit dans la mémoire 50b (impulsions de RW401 répercutées dans WRb avec Q=0). Pendant ce temps, le premier bloc est transféré de la mémoire 50a vers le disque dur (impulsions de RW411 répercutées dans RDa avec Q=0). A l'étape suivante, le bloc qui vient d'être écrit dans la mémoire 50b sera transféré vers le disque dur pendant qu'un nouveau bloc sera écrit dans la mémoire 50a, et ainsi de suite. Les octets des blocs de rang impair transitent ainsi par la mémoire 50a, tandis que les octets des blocs de rang pair transitent par la mémoire 50b. La cadence imposée par le contrôleur SCSI 42 pour les échanges avec le disque dur est typiquement de 10 mégaoctets par seconde pour les disques actuellement disponibles.

Le gestionnaire de transferts 52 peut également assurer des fonctions de contrôle pour transmettre des signaux d'interruption IT2 (figure 2) au processeur 84 lorsque certaines situations sont détectées. Ces situations comprennent par exemple :

- le fin du transfert d'un bloc depuis ou vers le bus commun 80 pour le module d'interface de stockage en question (changement d'état de la bascule 116) ;
- la fin du transfert d'un bloc depuis ou vers le disque dur raccordé ;
- des violations d'accès (par exemple, des impulsions RW401 arrivent encore alors que le compteur 112 a déjà atteint l'adresse A0+N1 et n'a pas encore été réinitialisé).

L'organisation du gestionnaire de transferts représenté sur la figure 5 est adaptée à une réalisation matérielle du dispositif de transfert 10 dans laquelle chaque module d'interface de stockage 40 est constitué par une carte-fille venant se brancher sur une carte-mère regroupant les autres éléments du dispositif (modules d'interface 30 et 60, bus commun 80, module de séquencement 82, processeur de supervision 84...). Chaque carte-fille n'est alors reliée à la carte-mère que par le bus commun de 8 bits, par le bus 86, par la ligne de séquencement issue du module 82 et par les lignes d'interruption IT2, IT3 issues du gestionnaire 52 et du contrôleur SCSI 42, ce qui simplifie les problèmes de connectique. On notera que d'autres réalisations matérielles du dispositif pourraient conduire à organiser différemment les gestionnaires de transferts 52. Par exemple, si l'ensemble du dispositif est réalisé sur une seule carte, la sélection et la gestion des adresses pour les différentes mémoires tampon 50a, 50b peuvent être centralisées plutôt que réparties dans les modules d'interface de stockage.

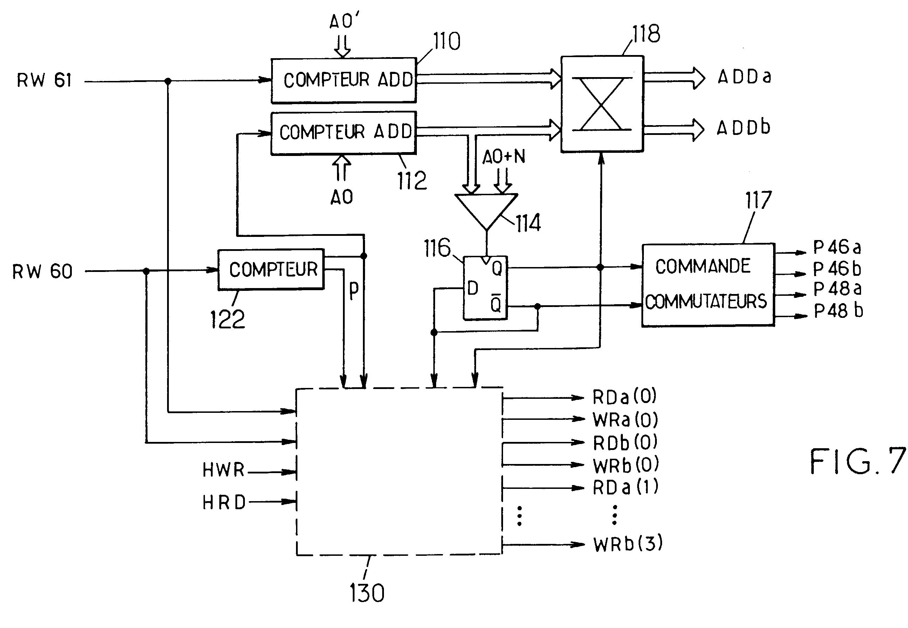

L'organisation, schématisée sur la figure 7 du gestionnaire de transferts 72 du module 60 d'interface avec l'ordinateur-hôte est en grande partie semblable à celle du gestionnaire 52 représenté sur la figure 5, de sorte que des références identiques on été utilisées sur les figures 5 et 7 pour désigner des éléments analogues. Le compteur d'adresse 112 concernant les mémoires tampon 70a ou 70b accessibles depuis le bus commun 80 n'est pas incrémenté directement par les impulsions de commande d'accès RW60 issues du module de séquencement 82, mais seulement toutes les quatre impulsions. Un compteur 122 sur deux bits est incrémenté par les impulsions RW60, et son bit de poids fort, qui présente une impulsion toutes les quatre impulsions de RW60, commande l'incrémentation du compteur d'adresse 112. Le signal RW61 commande les accès aux mémoires tampon 70a, 70b par le bus 14 de l'ordinateur-hôte. Ce signal RW61 peut être généré localement par le gestionnaire 72 ou reçu du contrôleur DMA de l'ordinateur-hôte. Les signaux de configuration HWR et HRD reçus du processeur de supervision 84 jouent le même rôle que les signaux DWR et DRD dans le schéma de la figure 5 : HWR=1 dans le cas d'un transfert vers l'ordinateur-hôte, et HRD=1 dans le cas d'un transfert depuis l'ordinateur-hôte. La logique combinatoire 130 est modifiée pour assurer l'accès séquentiel du bus commun dans les quatre mémoires tampon 70a ou 70b. La logique combinatoire, non détaillée sur la figure 7, traite les signaux RW60, RW61, HWR, HRD, Q, $\overline{Q}$ et la valeur courante p du compteur 122 de manière à réaliser les opérations booléennes :

RDa(i)=[Q et HRD et RW60 et (p=i)] ou ($\overline{Q}$ et HWR et RW61)

WRa(i)=[Q et HWR et RW60 et (p=i)] ou ($\overline{Q}$ et HRD et RW61)

RDb(i)=[$\overline{Q}$ et HRD et RW60 et (p=i)] ou (Q et HWR et RW61)

WRb(i)=[$\overline{Q}$ et HWR et RW60 et (p=i)] ou (Q et HRD et RW61),

RDa(i), WRa(i), RDb(i) et WRb(i) désignant respectivement les signaux de commande de lecture et d'écriture adressés aux mémoires tampon 70a et 70b raccordées à la (i+1)-ième paire de bus internes 64a, 64b du module 60 (i=0,1,2,3).

Le processeur de supervision 84 a à gérer un nombre assez élevé d'interruptions : celles issues du module de séquencement 82, des différents gestionnaires de transferts 52 et 72, des contrôleurs SCSI, de la mémoire 62 d'échange avec l'ordinateur-hôte... Il est alors judicieux d'adresser les différents signaux d'interruption à un circuit logique 132 formant collecteur d'interruptions (figure 2) . Ce circuit 132 transmet les interruptions au processeur 84 après les avoir éventuellement manipulées (par exemple il peut ne transmettre les interruptions venant des gestionnaires de transferts 52 qu'après avoir reçu les M interruptions correspondantes, pour ne pas trop perturber le processeur 84). Lorsque le processeur 84 reçoit une interruption du collecteur 132, il lit par son bus 86 un registre du collecteur 132 pour connaître l'origine de cette interruption afin d'exécuter le programme d'interruption approprié.

Pour résumer le fonctionnement global du dispositif selon l'invention, on va maintenant décrire le déroulement d'un exemple d'acquisition d'une séquence d'informations d'une ligne extérieure 20 vers les unités à disque durs 16, cet exemple pouvant aisément être transposé pour les autres modes de fonctionnement précédemment cités.

A la mise sous tension du dispositif, le processeur de supervision 84 détermine le nombre de disques durs effectivement raccordés (M) par interrogation successive des contrôleurs SCSI 42 de chacun des modules d'interface 40. L'ordinateur-hôte 12 définit le mode de fonctionnement du dispositif (type de transfert, interfaces mises en jeu, sélection de la vitesse, taille de la séquence définie ou non...), et fournit les instructions correspondantes au processeur 84 par l'intermédiaire de la mémoire à accès double 62. Le processeur de supervision 84 configure alors le module d'interface extérieure 30 de la manière expliquée précédemment. Dans notre exemple d'une acquisition, la mémoire tampon 32a sera activée, et l'élément de commutation 34a sera passant. Dans le cas d'une acquisition, le processeur de supervision 84 vérifie les ressources disponibles dans les disques durs en termes de nombre de fichiers. En cas d'anomalie, un signal d'alerte est adressé à l'ordinateur-hôte. Le processeur de supervision 84 programme le module de séquencement 82 et les gestionnaires de transferts 52 des modules d'interface de stockage 40 en ce qui concerne le premier bloc de la séquence à transférer, en leur fournissant les paramètres indiqués précédemment.

Une fois que tous les organes du dispositif ont été paramétrés, le transfert peut commencer et le processeur 84 active donc le signal de validation GO adressé au module de séquencement 82. Dès que la mémoire tampon d'entrée 32a est non vide, le module de séquencement 82 déclenche une interruption vers le processeur 84 pour le prévenir que l'acquisition est commencée. Cette information sera ensuite délivrée à l'ordinateur-hôte sur requête de statut du dispositif par ce dernier. Dès que le niveau de remplissage de la mémoire tampon d'entrée a dépassé la moitié de sa capacité, le transfert proprement dit commence sur le bus commun 80. La mémoire 32a est lue et les octets correspondants sont répartis entre les modules d'interface de stockage 40 comme illustré sur les figures 4 et 6. Pendant le transfert d'un bloc, le processeur de supervision 84 peut fournir au module de séquencement 82 et aux gestionnaires de transferts 52 les paramètres de configuration relatifs au transfert du bloc suivant. Ces paramètres sont conservés provisoirement dans des registres et seront chargés dès la fin du transfert du bloc courant.

La fin du transfert d'un bloc est détectée par le module de séquencement 82 et les gestionnaires de transferts 52 des modules d'interface 40. Lorsqu'un gestionnaire de transferts 52 détecte la fin d'un bloc, il commute automatiquement les mémoires tampon 50a, 50b qu'il gère, il génère une interruption à destination du processeur 84, et il prend en compte les nouveaux paramètres de configuration. Lorsque le module de séquencement 82 détecte la fin d'un bloc, il marque une pause comme expliqué précédemment pour garantir notamment que le basculement des mémoires tampon a bien eu lieu dans les modules d'interface de stockage, et il prend en compte ses nouveaux paramètres de configuration. Une fois qu'il a été averti de la fin du transfert d'un bloc, le processeur de supervision 84 commande le contrôleur SCSI 42 de chaque module d'interface de stockage 40 pour déclencher un transfert DMA entre les mémoires tampon qui viennent d'être remplies et les disques durs. Il détermine ensuite les paramètres de configuration pour le prochain bloc et il les fournit aux modules concernés. Après avoir reçu les M interruptions des contrôleurs SCSI 42 signifiant que les transferts vers les M disques durs utilisés sont terminés, le processeur 84 déclenche une lecture de compte-rendu au niveau de chaque contrôleur SCSI et également une vérification du statut de chaque gestionnaire de transferts 52 pour s'assurer que les M transferts vers les disques durs se sont déroulés sans erreur. Une fois que toute la séquence a été transférée, le processeur 84 met à jour la table d'accès aux fichiers (FAT), stockée par exemple sur le premier disque.

Le dispositif de transfert 10 décrit ci-dessus est compatible avec des débits numériques élevés sur les lignes de communication extérieures 20. Le bus commun 80 de 8 bits à 16 MHz permet d'envisager des transferts jusqu'à des vitesses de 128 Mbit/s. Cette valeur, déjà fort appréciable, pourrait être encore augmentée en élargissant le bus commun ou en augmentant sa cadence de fonctionnement. Les vitesses d'échange avec les disques durs peuvent également être très élevées, un gain supplémentaire étant obtenu grâce à la répartition des flux numériques entre plusieurs modules d'interface de stockage.

On note que ces performances sont obtenues sans monopoliser les ressources de l'ordinateur-hôte 12, du moins dans les modes d'acquisition et de restitution. L'ordinateur-hôte 12 a accès aux fichiers stockés sur les disques durs 16 raccordés au dispositif comme à n'importe quel fichier d'une mémoire périphérique.

Le découpage en blocs successifs des séquences d'information à transférer a l'avantage de conférer au dispositif une grande flexibilité d'utilisation. Il permet notamment les modes mixtes d'acquisition et de restitution précédemment évoqués. Etant donné les performances de débit qu'autorise le bus commun 80, il est possible de faire alterner des blocs relatifs à des séquences transférées entre des interfaces d'origine et de destination différentes. Vus depuis l'ordinateur-hôte ou les lignes extérieures, ces modes mixtes reviennent à effectuer plusieurs transferts différents en même temps.

Le dispositif selon l'invention présente de nombreuses applications, notamment en ce qui concerne le transfert d'informations relatives à des programmes de télévision numérique. Il peut ainsi être utilisé dans des serveurs de télévision numérique pour acquérir et restituer des flux numériques à haut débit. Le dispositif permet aisément une diffusion répétée avec décalage temporel d'un programme pour des applications dans des serveurs NVOD ("Near Video-On-Demand) sans que le programme ait besoin d'être stocké plusieurs fois.

L'association du dispositif à son ordinateur-hôte permet à ce dernier d'analyser, de créer et/ou de restituer des flux numériques. Le dispositif trouve ainsi des applications dans des systèmes pouvant inclure une ou plusieurs des fonctionnalités suivantes : émulation complète ou partielle d'un point d'émission MPEG2/DVB, tests de multiplexeurs ou de démultiplexeurs MPEG2, tests de codage/ décodage canal, création et/ou diffusion d'informations (tables) de description de services en télévision numérique, création et/ou diffusion de programmes de télévision numérique multiplexés ou non... Un tel système polyvalent constitue alors une plate-forme unique dont l'ergonomie peut être rendue satisfaisante grâce aux logiciels d'exploitation de l'ordinateur-hôte.

**Revendications**

1.  Dispositif de transfert d'informations numériques, caractérisé en ce qu'il comprend un module d'interface extérieure (30) avec au moins une ligne de communication (20), au moins un module d'interface de stockage (40) permettant d'échanger des informations numériques avec une unité de stockage respective (16), un module (60) d'interface avec un ordinateur-hôte (12), un bus de données commun (80) relié à chacun desdits modules d'interface (30,40,60), un module (82) de séquencement du bus commun pour déclencher des transferts d'informations sur le bus commun entre les modules d'interface, et un processeur de supervision (84) pour configurer le module de séquencement du bus commun et les modules d'interface en réponse à des ordres de transfert reçus de l'ordinateur-hôte (12).

2.  Dispositif selon la revendication 1, caractérisé en ce que chaque module d'interface de stockage (40) comprend un contrôleur (42) de l'unité de stockage associée (16), deux bus internes (44a, 44b) reliés chacun audit contrôleur de l'unité de stockage par l'intermédiaire de premiers moyens de commutation (46a, 46b) et au bus commun (80) par l'intermédiaire de seconds moyens de commutation (48a, 48b), deux mémoires tampon (50a, 50b) raccordées chacune à un bus interne respectif, et des moyens de gestion de transferts (52) commandant lesdits moyens de commutation (46a, 46b, 48a, 48b) et les accès en écriture et en lecture dans lesdites mémoires tampon (50a, 50b) sous le contrôle du module (82) de séquencement du bus commun et dudit contrôleur de l'unité de stockage (42), de façon telle qu'une des deux mémoires tampon soit accessible par le bus commun pendant que l'autre est accessible par le contrôleur, chaque mémoire tampon étant alternativement accessible par le bus commun et par le contrôleur.

3.  Dispositif selon la revendication 2, caractérisé en ce que le transfert d'informations sur le bus commun (80) de ou vers les unités de stockage (16) est réalisé par blocs successifs, chaque bloc ayant une taille au plus égale à la capacité d'une des mémoires tampon (50a, 50b) d'un module d'interface de stockage (40) multipliée par le nombre de modules d'interface de stockage utilisés, et en ce que le processeur de supervision (84) est agencé pour configurer le module (82) de séquencement du bus commun et les modules d'interface de stockage (40) avant chaque transfert d'un bloc.

4.  Dispositif selon la revendication 3, caractérisé en ce que le contrôleur d'unité de stockage (42) et les moyens de gestion de transferts (52) de chaque module d'interface de stockage (40) sont adressables par le processeur de supervision (84), le processeur de supervision étant programmé pour configurer ledit contrôleur d'unité de stockage et lesdits moyens de gestion de transferts pour le transfert de chacun des blocs d'informations successifs.

5.  Dispositif selon la revendication 3 ou 4, caractérisé en ce que le module (82) de séquencement du bus commun est agencé pour que les mots de données appartenant à chaque bloc d'informations transféré de ou vers les unités de stockage (16) soient échangés à tour de rôle par l'intermédiaire des différents modules d'interface de stockage utilisés (40).

6. Dispositif selon la revendication 3, 4 ou 5, caractérisé en ce que les moyens de gestion de transferts (52) de chaque module d'interface de stockage (40) sont agencés pour faire transiter par l'une des mémoires tampon (50a, 50b) dudit module d'interface de stockage des mots de données appartenant aux blocs de rang impair, et par l'autre mémoire tampon dudit module d'interface de stockage des mots de données appartenant aux blocs de rang pair.

7. Dispositif selon l'une quelconque des revendications 1 à 6, caractérisé en ce que le module (60) d'interface avec l'ordinateur-hôte comprend un bus de l'ordinateur-hôte (14), et une mémoire à accès double (62) reliée d'une part au bus de l'ordinateur-hôte (14) et d'autre part à un bus (86) du processeur de supervision pour permettre des échanges de commandes et de données entre l'ordinateur-hôte (12) et le processeur de supervision (84).

8. Dispositif selon l'une quelconque des revendications 1 à 7, caractérisé en ce que le module d'interface avec l'ordinateur-hôte (60) comprend un bus de l'ordinateur-hôte, au moins une paire de bus internes (64a, 64b) reliés chacun au bus commun (80) par l'intermédiaire de premiers moyens de commutation (66a, 66b) et au bus (14) de l'ordinateur-hôte par l'intermédiaire de seconds moyens de commutation (68a, 68b), au moins une paire de mémoires tampon (70a, 70b) reliées chacune à un bus interne respectif (64a, 64b), et des moyens de gestion de transferts (72) commandant lesdits moyens de commutation (66a, 66b, 68a, 68b) et les accès en écriture et en lecture dans lesdites mémoires tampon (70a, 70b) sous le contrôle du module (82) de séquencement du bus commun, de façon telle qu'une des deux mémoires tampon de chaque paire soit accessible par le bus commun (80) pendant que l'autre est accessible par le bus de l'ordinateur-hôte (14), chaque mémoire tampon étant alternativement accessible par le bus commun et par le bus de l'ordinateur-hôte.

9. Dispositif selon l'une quelconque des revendications 1 à 8, caractérisé en ce que le module d'interface extérieure (30) comprend au moins une mémoire tampon (32a, 32b) de type premier entré-premier sorti reliée au bus commun (80) par l'intermédiaire de moyens de commutation (34a, 34b), les accès à ladite mémoire tampon depuis le bus commun étant commandés par le module (82) de séquencement du bus commun.

FIG.1.

FIG.3.

FIG.2.

FIG.4.

EP 0 774 718 A1

FIG.5

EP 0 774 718 A1

FIG.6.

EP 0 774 718 A1

FIG.7

EP 0 774 718 A1

Office européen
des brevets

**RAPPORT DE RECHERCHE EUROPEENNE**

Numero de la demande
EP 96 40 2404

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US 5 255 371 A (R. A. LATIMER ET AL)<br>* colonne 3, ligne 33 - ligne 57 *<br>* colonne 4, ligne 1 - colonne 9, ligne 2; figures *<br>--- | 1-9 | G06F13/12 |
| X | ICASSP-92, VOLUME 5, D2EV, DIGITAL SIGNAL PROCESSING 2, ESTIMATION, VLSI,<br> 23 Mars 1993 - 26 Mars 1992, SAN FRANCISCO, CA, US,<br>pages v-665-v668, XP000341508<br>G. DUDLEY ET AL: "A PROGRAMMABLE PROCESSOR FOR BIT-SERIAL PROTOCOLS"<br>* le document en entier *<br>--- | 1-9 | |
| A | COMPUTER DESIGN,<br>vol. 27, no. 2, 15 Janvier 1988,<br>LITTLETON, MA, US,<br>pages 57-73, XP000082561<br>R. WILSON: "Designers seek new approaches to open I/O bottlenecks"<br>* page 66 - page 67 *<br>--- | 1-9 | |
| A | RESEARCH DISCLOSURE,<br> no. 338 (33835), Juin 1992, EMSWORTH, GB,<br>page 450 XP000315655 "A High Speed Data Transfer Controller"<br>* le document en entier *<br>--- | 1-9 | DOMAINES TECHNIQUES RECHERCHES (Int.Cl.6)<br><br>G06F |
| A | EP 0 389 046 A (N. V. PHILIPS' GLOEILAMPENFABRIEKEN)<br>* page 3, ligne 45 - ligne 57 *<br>* page 4, ligne 1 - ligne 51 *<br>----- | 1-9 | |

Le présent rapport a été établi pour toutes les revendications

| Lieu de la recherche | Date d'achèvement de la recherche | Examinateur |
|---|---|---|
| BERLIN | 3 Février 1997 | Abram, R |

EPO FORM 1503 03.82 (P04C02)